(19) Europäisches Patentamt
European Patent Office
Office européen des brevets

(11) EP 2 759 855 A1

(12) **EUROPEAN PATENT APPLICATION**
published in accordance with Art. 153(4) EPC

(43) Date of publication:
**30.07.2014 Bulletin 2014/31**

(21) Application number: **12832872.1**

(22) Date of filing: **20.09.2012**

(51) Int Cl.:
***G02B 5/30*** *(2006.01)*
***B32B 7/02*** *(2006.01)*
***G02B 3/00*** *(2006.01)*

(86) International application number:
**PCT/JP2012/074086**

(87) International publication number:
**WO 2013/042737 (28.03.2013 Gazette 2013/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2011 JP 2011205802**

(71) Applicant: **Fujifilm Corporation**
**Minato-ku**
**Tokyo 106-0031 (JP)**

(72) Inventors:
- **TAKAHASHI Kouki**
**Ashigarakami-gun**
**Kanagawa 258-8577 (JP)**
- **AMIMORI Ichiro**
**Ashigarakami-gun**
**Kanagawa 258-8577 (JP)**

(74) Representative: **HOFFMANN EITLE**
**Patent- und Rechtsanwälte**
**Arabellastrasse 4**
**81925 München (DE)**

# (54) OBJECT INCLUDING LATENT IMAGE

(57) The present invention provides a product comprising a patterned optically anisotropic layer having two or more regions of different birefringence, which has a latent image becoming visible through a polarizing plate, wherein an image visible through the polarizing plate including the latent image comprises a periodic structure. An additional visual effect can be attached to the latent image observed through a polarizing plate.

Fig.4

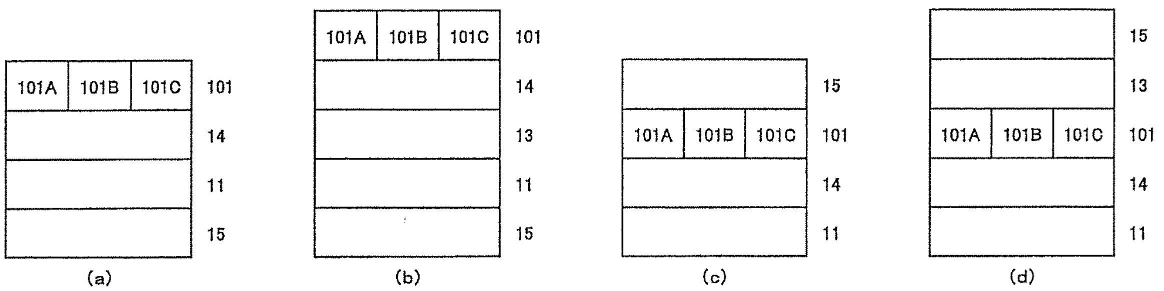


EP 2 759 855 A1

## Description

Technical Field

The present invention relates to a product having latent image. More specifically, the present invention relates to a product from which a latent image, being nearly invisible under ordinary unpolarized light sources and becoming visible when held under a polarizing plate, is visible with additional effect. The present invention also relates to a sheet for observing the latent image of such a product.

Background Art

A patterned birefringent product has a latent image being nearly invisible under ordinary unpolarized light sources and becoming visible when held under a polarizing plate. PTL 1 and PTL 2 disclose examples of processes of producing patterned birefringent products and propose application of the products for preventions of counterfeiting.
To increase an effect of preventing counterfeiting, a latent image is preferably more complex. To this end, addition of stereoscopic effect to the latent image and utilization of effect obtained by a particular kind of medium are conceivable.
As an example of the graphical effect obtained by a particular kind of medium, stereoscopic effects obtained by using lenticular lens or a lens assembly sheet as disclosed in PTL 3 or PTL 4 are conventionally known. However, birefringent pattern, at the time of determination of counterfeiting, needs to be observed through a polarizing plate which has been arranged in a specific direction. The position needs to be strictly adjusted in each observation or in the preparation of the observed medium, in order to conduct an observation by using lenticular lens or the like in addition to the polarizing plate.
PTL 5 discloses an addition of a layer having a moire pattern to provide an image on the moire pattern. However, such a structure would require additional layers in a counterfeiting prevention device, readily making thickness of the part of latent image greater, which is undesirable, particularly in an application in which the counterfeiting prevention device is attached to a thin support such as a ticket, for example.

Citation List

Patent Literature

PTL 1: Japanese Unexamined Patent Publication (KOKAI) No. 2009-69793
PTL 2: Japanese Unexamined Patent Publication (KOKAI) No. 2010-113249
PTL 3: Japanese Unexamined Patent Publication (KOKAI) No. (Heisei) 9-146045
PTL 4: Japanese Patent No.4685101
PTL 5: Japanese Unexamined Patent Publication (KOKAI) No. 2005-96267

SUMMARY OF THE INVENTION

The object of the present invention is to provide a patterned birefringent product having a latent image which is observed through a polarizing plate, wherein the latent image is provided with an additional visual effect.
The present inventors have tried various designs of latent images produced from birefringent patterns and found out that a stereoscopic effect or a latent image in a latent image can be obtained by making a latent image include a periodic structure and achieved the present invention.
The present invention thus provides [1] to [12] below:

[1] A product comprising a patterned optically anisotropic layer having two or more regions of different birefringence, which has a latent image becoming visible through a polarizing plate, wherein an image visible through the polarizing plate including the latent image comprises a periodic structure.
[2] The product according to [1], wherein periodic pitch of the periodic structure is 1 to 10 micrometers.
[3] The product according to [1] or [2], wherein the latent image comprises a periodic structure.
[4] The product according to any one of [1] to [3], wherein the regions of different birefringence are regions of different retardation.
[5] The product according to any one of [1] to [4], wherein the patterned optically anisotropic layer is formed by a method comprising the following steps (1) to (3) in this order:

(1) heating or irradiating with light a layer formed of a composition comprising a liquid-crystal compound;
(2) subjecting the layer to patterned light exposure; and
(3) heating the obtained layer to 50°C or higher but not higher than 400°C.

[6] The product according to any one of [1] to [5], wherein the image visible through the polarizing plate comprises a periodic structure and a non-periodic structure.
[7] The product according to any one of [1] to [6], wherein the image visible through a polarizing plate consists of a periodic structure.
[8] The product according to any one of [1] to [7], which further comprises a printed layer.
[9] A combination of a lens assembly sheet, a polarizing plate, and the product according to any one of [1] to [8], wherein the periodic structure is designed to correspond to period of lens of the lens assembly sheet.
[10] The combination according to [9], wherein periodic pitch of the periodic structure is 0.1 to 0.999 times or 1.001 to 2.0 times of periodic pitch of lens of the lens assembly sheet.
[11] A combination of a parallel lines sheet, a polarizing plate, and the product according to any one of [1] to [8], wherein the periodic structure is designed to correspond to period of the parallel lines sheet.
[12] A sheet for observing the latent image of the product according to any one of [1] to [8], which comprises a lens assembly layer and a polarizing layer, wherein period of the lens assembly layer is selected to correspond to the periodic structure of the product.
[13] A combination of the product according to any one of [1] to [8] and a sheet comprising a lens assembly layer and a polarizing layer, wherein the periodic structure of the product is designed to correspond to period of lens of the lens assembly layer.
[14] A sheet for observing the latent image of the product according to any one of [1] to [8], which comprises a layer having parallel lines and a polarizing layer, wherein period of the parallel lines is selected to correspond to the periodic structure of the product.
[15] A combination of the product according to any one of [1] to [8] and a sheet comprising a layer having parallel lines and a polarizing layer, wherein the periodic structure of the product is designed to correspond to period of the parallel lines.

Effect of the Invention

The present invention provides a patterned birefringent product having a latent image which is observed through a polarizing plate, wherein the latent image is provided with an additional visual effect. The present invention also provides a sheet for observing the latent image of the product.

BRIEF DESCRIPTION OF THE DRAWINGS

Fig. 1 is a drawing schematically showing typical configurations of basic patterned birefringent products (transmitting and reflecting types).
Fig. 2 is a drawing schematically showing typical configurations of patterned birefringent products each having a patterned optically anisotropic layer on a support.
Fig. 3 is a drawing schematically showing typical configurations of patterned birefringent products each having an orientation layer.
Fig. 4 is a drawing schematically showing typical configurations of patterned birefringent products each having an adhesive layer.
Fig. 5 is a drawing schematically showing typical configurations of patterned birefringent products each having a printed layer.
Fig. 6 is a drawing schematically showing typical configurations of transfer-type patterned birefringent products each having a dynamic property control layer and a transfer layer.
Fig. 7 is a drawing schematically showing typical configurations of patterned birefringent products each having an additive layer.
Fig. 8 is a drawing schematically showing typical configurations of patterned birefringent products each having multiple patterned optical anisotropic layers.
Fig. 9 is a drawing schematically showing an arrangement when the product of the present invention including a layer having periodic retardation pattern and a layer having non-periodic retardation pattern is observed through a lens assembly sheet and a polarizing plate.
Fig. 10 is a drawing schematically showing an arrangement when the product of the present invention including a

layer having periodic retardation pattern and a layer having another periodic retardation pattern is observed through a lens assembly sheet and a polarizing plate.

Fig. 11 is a drawing showing the pattern of light exposure conducted in Example 1.

Fig. 12 is a drawing schematically showing an arrangement when the product prepared in Example 1 is observed through a lens assembly sheet and a polarizing plate.

Fig. 13 is a drawing showing the relation of size between the period of the periodic structure part and the structure unit of the product prepared in Example 1.

Fig. 14 is a drawing showing the pattern of light exposure conducted in Example 2.

Fig. 15 is a drawing showing an arrangement when the product prepared in Example 2 is observed through a parallel lines sheet and a polarizing plate.

MODES OF CARRYING OUT THE INVENTION

The present invention is described in detail below.

In the present description, a "to" is employed to mean that the upper limit value and lower limit value of the numeric values indicated before and after the "to" are included.

In the present description, retardation can be measured by the spectral phase difference method by conversion from a transmission or reflectance spectrum to a phase difference by the method described in the Journal of the Optical Society of America, Vol. 39, p. 791-794 (1949) or Japanese Unexamined Patent Publication (KOKAI) No. 2008-256590. The above references are measurement methods that employ transmission spectra. Since the light passes through the optically anisotropic layer twice, particularly in the case of reflection, half of the phase difference converted from the reflection spectrum can be employed as the phase difference of the optically anisotropic layer. Retardation denotes the frontal retardation, unless otherwise indicated. Retardation in the present description means the retardation measured at the wavelengths of 611 $\pm$ 5 nm, 545 $\pm$ 5 nm, and 435 $\pm$ 5 nm for R, G, and B, and means the retardation measured at a wavelength of 545 $\pm$ 5 nm when no reference to color is given.

In the present description, use of the word "essentially" in reference to retardation or birefringence means a difference in retardation of within $\pm$ 5°, inclusive. A "retardation of essentially 0" means a retardation of 5 nm or less. Unless specifically stated otherwise, the wavelength at which a refractive index is measured refers to any wavelength within the visible light region. In the present description, the term "visible light" refers to light with a wavelength of from 400 to 700 nm.

[The latent image]

In the present description, the term "latent image" refers to an image being invisible under unpolarized light sources and becoming visible under a polarizing plate. In the present invention, the image becoming visible under a polarizing plate can be obtained from birefringent pattern. The patterned birefringent product of the present invention is characterized in that the image observed through a polarizing plate, which includes its latent image, has a periodic structure. That is, the feature of the patterned birefringent product of the present invention is that an image of combination of its latent image and its non-latent image such as a printed image will have a periodic structure. The patterned birefringent product of the present invention preferably can present a periodic structure only by its latent image.

[The definition of a birefringence pattern]

A birefringence pattern means a pattern in which two or more domains of different birefringence are arranged and pictured in the two-dimensional in-plane or three-dimensionally. In particular, two-dimensionally within a plane, the birefringence is defined by the two parameters of the direction of the slow axis in which the refractive index peaks and the magnitude of retardation within the domain. For example, defects of orientation in-plane and the inclination distribution of liquid crystals in the direction of thickness in a phase difference film based on a compound with liquid crystallinity can also be said to constitute a birefringence pattern in a broad sense. However, patterning that is achieved by intentionally controlling birefringence based on a predetermined design is desirably defined as a birefringence pattern. Unless specifically stated otherwise, the birefringence pattern can consist of multiple layers, and the boundaries between the patterns of the multiple layers can align or be different.

[The product of the present invention]

The product of the present invention includes a patterned optically anisotropic layer. The product of the present invention may also include other functional layers that will be described below in addition to the patterned optically anisotropic layer. The product of the present invention may be a product prepared by applying directly or via other layers

an optically anisotropic layer that will be described below, and carrying out steps of drying and patterned light exposure, or may be a product transferring a patterned optically anisotropic layer from a birefringent transfer foil having a temporary support, adhesive layer or the like through a predetermined process. For the embodiment in which a birefringent transfer foil is used, the description in Japanese Unexamined Patent Publication (KOKAI) No. 2010-113249 can be referred to. In the present description, the term "patterned optically anisotropic layer" refers to an optically anisotropic layer having a birefringence pattern. In other words, it refers to an optically anisotropic layer having two or more regions of different birefringence. The patterned optically anisotropic layer preferably has three or more regions of different birefringence. Individual regions of identical birefringence can be continuous or discontinuous in shape. A patterned optically anisotropic layer can be prepared by using a layer formed from a composition containing a liquid-crystal compound and forming a pattern of birefringence by a method including a patterned light exposure. However, the preparation method is not particularly limited as far as a layer having different birefringence can be formed.

[The base material]

A base material usually corresponds to a product that has not been applied with a latent image of birefringent pattern, and a support that will be described below may correspond to the base material. Examples of the base material include products made of paper, plastic, metal or the like. Specific examples of the base product are not particularly limited and include plastic cards employed as prepaid cards, ID cards, and the like; various certificates; marketable securities; gift certificates; and the packages of commercial products such as luxury brand products, cosmetics, drugs, and tobacco. Products having a metal reflective surface are preferably employed. Examples of such base materials include the surface of digital cameras, the inside surface of wristwatches, the inside surfaces of pocket watches, the surfaces of the cases of personal computers, the inner and outer surfaces of mobile phones, the inner and outer surfaces of portable music players, the covers of cosmetics and beverages, the inner and outer surfaces of PTP packages employed for confections and pharmaceuticals, the outer surfaces of the metal cans of drug packages, the outer surfaces of precious metals, the outer surfaces of jewelry, and transparent packaging containing one of the products having a metal reflective surface given by way of example above.

When the patterned optically anisotropic layer has a self-supporting capability, for example, the product of the present invention can be constructed without a base material (a support). (A film consisting of only the patterned optically anisotropic layer(s), for example).

[Periodic structure]

In the present description, the term "periodic structure" means a structure composed of a repeat of a given structure unit.

The periodic structure may be a structure in which given structure units are aligned at constant intervals, or may be a structure in which given structure units are aligned while changing intervals at a constant regularity. That is, "a periodic structure" simply means a structure that is not random. The given structure units can be aligned in the same size and color, or can be aligned in different size or color, or in different size and color.

By making the image observed through a polarizing plate to be a structure including a periodic structure, the image observed through the polarizing plate can be provided with an additional visual effect. The pitch of the periodic structure which is observed through a polarizing plate may be about 1 micrometer to 10 mm, preferably 5 micrometers to 2000 micrometers, more preferably 10 micrometers to 1000 micrometers. The image observed through a polarizing plate may include a non-latent image derived from a printed layer as well as a latent image. It is also preferable that a periodic structure is achieved only by a latent image. Usually, in order to prepare a latent image to be a periodic structure, the birefringent pattern can be made to be periodic.

The additional visual effect is preferably an effect that can be confirmed by observing the products of the present invention via an additional sheet in addition to the polarizing plate. As the additional sheets, preferable examples include a lens assembly sheet and a parallel lines sheet. A lens assembly sheet and a parallel lines sheet will be explained below.

A lens assembly sheet is a sheet having a plural of lens (preferably convex lens) at constant intervals vertically and horizontally. For example, the lens assembly sheet can be produced by a method of shaping a plastic material with a mold having a desired shape. The plastic material used can be of thermoplastic, or may be of a UV-curable. As commercially available lens assembly sheets, for example, fly-eye lens-lens array manufactured by Japanese special optical resin Ltd. Corporation Ltd. or microlens array sheet manufactured by Gras Pak Japan can be used. Distance between the lens in the lens assembly sheet (lens pitch) is not particularly limited and may be a 10 micrometers to 5000 micrometers, preferably 50 micrometers to 1000 micrometers, more preferably 100 micrometers to 500 micrometers. In order to obtain a stereoscopic effect in images observed through a lens assembly sheet in addition to a polarizing plate, the periodic structure in the image observed through a polarizing plate (preferably a latent image) can be designed according to the following formula based on the lens pitch of the lens assembly sheet to be used, the distance between

the birefringent pattern and lens center, and the stereoscopic effect desired.

$$L = \frac{pd}{p - w} \quad \text{Formula (1)}$$

$$A \ (\text{Enlargement rate}) = \frac{L}{d} = \frac{p}{p - w} \quad \text{Formula (2)}$$

p :Lens pitch
W :Drawing pitch
L :Depth
d :Distance between the center of lenz and drawing plane

For example, when the image to be observed through a lens sheet at the side closer to the observer side and a polarizer at the side farther from the observer side is made of stacked structure, effects can be obtained such that the image is enlarged and represents depth in the direction away from the observer when the pitch of the image to be observed is smaller than the lens pitch, and the image is enlarged or decreased and looms in the direction closer to the observer when the pitch of the image to be observed is larger than the lens pitch. For either case, the closer the pitch of the image to be observed is to the lens pitch, the deeper the depth or the stronger the looming becomes. At the same time the closer the pitch of the image to be observed is to the lens pitch, the larger the image is enlarged. When the pitch of the image to be observed is exactly the same as the lens pitch, no effect is obtained.

When the pitch of the image to be observed is smaller than the lens pitch, the periodic pitch of the image observed through a polarizing plate may be from 0.1 times to 0.999 times, preferably 0.2 times to 0.998 times, more preferably 0.5 times to 0.995 times the lens pitch. When the pitch of the image to be observed is smaller than 0.1 times the lens pitch, a sufficient visual effect cannot be obtained and when the pitch of the image to be observed is larger than 0.999 times the lens pitch, an accurate manufacture becomes difficult although theoretically a large effect can be obtained.

When the pitch of the image to be observed is larger than the lens pitch, the periodic pitch of the image observed through a polarizing plate may be from 1.001 times to 2 times, preferably 1.002 times to 1.8 times, more preferably 1.005 times to 1.5 times the lens pitch. When the pitch of the image to be observed is larger than 2.0 times the lens pitch, a sufficient visual effect cannot be obtained and when the pitch of the image to be observed is smaller than 1.001 times the lens pitch, an accurate manufacture becomes difficult although theoretically a large effect can be obtained.

In the design of the latent image with a periodic structure, "A study of periodic stereo image which uses a feature of moire interference" Oishi Noriji, Image Information and Television, Technical report, VOL.34, NO.24, pp.15 -28 (2010.6) can be referred to.

A parallel lines sheet is a sheet having parallel lines aligned close regularly. A parallel lines sheet can be prepared by transferring the stripe design desired with a thermally transferable ink stripes or by depositing with a photomask having a stripe design desired, on a transparent sheet such as PET (polyethylene terephthalate) (OHP sheet, for example).

In the parallel lines sheet which is used for the observation of a patterned birefringent product of the present invention, the parallel lines are preferably composed of a repeat of portion that blocks light completely and transparent portion. Further in order to eliminate the need for a specific alignment of the patterned birefringent product of the present invention and the parallel lines sheet, it is preferable that the repeat of the portions have the same width. The image of the patterned birefringent product of the present invention which is observed through a polarizing plate (preferably a latent image) is designed to correspond to the striped design of the parallel lines sheet to be used.

For example, when a parallel lines sheet composed of a repeat of portion that blocks light completely and transparent portion, which have the same width to each other is used, the image of the patterned birefringent product of the present invention which is observed through a polarizing plate can be designed on a stripe having the same width.

[Applications of a patterned birefringent product]

The birefringence pattern of the product of the present invention is normally either nearly colorless or transparent, and nearly invisible or permits only the identification of an image based on a print layer or the like. However, when such

products are viewed through a polarizing plate, an additional characteristic contrast or colors are exhibited and can be readily visibly recognized, and preferably stereoscopic effect or the like that can be observed by using an additional sheet can be obtained. Utilizing this property, the product of the present invention can be employed as means of preventing forgery, for example. That is, using a polarizing plate, images with multiple colors that are normally nearly invisible to the naked eye can be made out in the patterned birefringent product. When a birefringence pattern is copied without the intervention of a polarizing plate, nothing is picked up. Conversely, when copied through a polarizing plate, a permanent pattern, that is, a pattern that is visible even without the polarizing plate, remains. Accordingly, it is difficult to duplicate a birefringence pattern. Such methods of producing birefringence patterns are not widespread and the materials are also quite unique. Thus, such products are thought to be suited to use as means of preventing counterfeiting.

The birefringence pattern on the surface of the product of the present invention does not only have security functions based on latent images. When coded with bar codes, QR codes, or the like, they can carry digital information. Digital encryption is also possible. As set forth above, by forming high-resolution latent images, a micro latent image that cannot be made out with the naked eye even through a polarizing plate can be printed, thereby further enhancing security. Additionally, security can be enhanced by combining such a device with the printing of invisible ink, such as UV fluorescent ink or IR ink,

The product to which a birefringence pattern has been transferred can be added with functions other than security functions. They can be combined with product information display functions such as price tags and 'Best used by' dates and water immersion functions achieved by the printing of ink that changes color when exposed to water.

[The structure of the product of the present invention]

The patterned birefringent product of the present invention comprises at least one patterned optically anisotropic layer. In the present description, the term "patterned optically anisotropic layer" means an optically anisotropic layer in which regions of different birefringence are present in the form of a pattern. The patterned optically anisotropic layer can be readily fabricated using the birefringence pattern builder described in paragraphs [0053] to [0146] of Japanese Unexamined Patent Publication (KOKAI) No. 2009-69793, for example, but the method of fabrication is not specifically limited as far as it yield a layer comprised of regions of different birefringence present in the form of a pattern.

When an image including a periodic structure is formed only with the latent image in the product of the present invention, the pattern of the regions of different birefringence in the "patterned optically anisotropic layer" may include a periodic structure, and may at the same time include non-periodic structure.

In the figures, regions of different birefringence are illustrated as 101A, 101B, and 101C.

Figs. 1 (a) and (b) show the structures of the most basic structure of the products of the present invention of transmitting and reflecting types.

In the case of the transmitting type, the light source and the observation point are on opposite sides of patterned optically anisotropic layer, and light exiting a polarized light source prepared using a polarizing plate or the like passes through the patterned optically anisotropic layer, adopting a different elliptically polarized state in-plane. It then passes through another polarizing plate on the observation point side, rendering the information visible. Here, the polarizing plate can be a linear polarizing plate, a circular polarizing plate, or an elliptically polarizing plate, and the polarizing plate itself can have a birefringence pattern or a dichroic pattern.

In the case of the reflecting type, the light source and the observation point are both on the same side as viewed from patterned optically anisotropic layer, and a reflective layer is present on the opposite side from them. In that case, the light exiting a polarized light source prepared using a polarizing plate or the like passes through the patterned optically anisotropic layer, reflects off the reflective surface, passes back through the product having a birefringence pattern, outputing a different elliptically polarized state in-plane. Finally, it passes through the polarizing plate on the observation point side, rendering the information visible. Here, the polarizing plate can be a linear polarizing plate, a circular polarizing plate, or an elliptical polarizing plate, and the polarizing plate itself can have a birefringence pattern or a dichroic pattern. The same polarizing plate can be used for the light source and observation. The reflective layer 13 can double as a highly reflective hologram layer, an electrode layer, or the like. The reflective layer can be on the optically anisotropic layer side or the opposite side of the support, but is preferably on the optically anisotropic layer side because this places few limitations on the support.

The reflective layer can be a semitransparent-semireflective layer that partially reflects light and partially passes light. In that case, not only can the product having the birefringence pattern render both transmitted and reflected images visible, but it can permit the visual recognition, from above the optically anisotropic layer and without a filter, of common information such as text or images on the lower side of the semitransparent-semireflective layer of the product having a birefringence pattern.

Figs. 2 (a) and (b) are examples of transmitting type and reflecting type, respectively, each having a patterned optically anisotropic layer 101 on a support or temporary support 11. When the support 11 is used as a temporary support, the patterned optically anisotropic layer 101 can be transferred to a target product with an adhesive or contact

adhesive after removal of the temporary support.

The patterned birefringent products shown in Figs. 3(a) and (b) are examples each having an orientation layer 14. When employing a layer formed of an optically anisotropic layer that has been fixed by polymerization by heating or irradiation with light after applying and drying a solution containing a liquid-crystal compound to form a liquid-crystal phase as patterned optically anisotropic layer 101, orientation layer 14 functions to facilitate orientation of the liquid-crystal compound.

Figs. 4(a) to (d) are examples of patterned birefringent products each having an adhesive layer 15. An adhesive layer becomes necessary when fabricating a patterned birefringent product such as a seal label. Generally, mold-releasing paper or a mold-releasing film is bonded to the adhesive layer, which is preferable from a practical perspective. Further, it can be a special adhesive layer such that any attempt to peel it off once bonded to the targeted material causes adhesive to remain on the targeted material in a specific pattern.

Figs. 5(a) to (d) are examples of products containing printed layers 16. The printed layer may have an image that gives an image including periodic structure in combination with the invisible birefringent pattern (the latent image) when viewed through a polarizing plate. The image of the printed layer may also be the one formed independently of the latent image. The printing can be invisible security printing by means of a UV fluorescent dye or IR dye. The printed layer can be above or beneath the patterned optically anisotropic layer, or can be on the opposite side of the support from the patterned optically anisotropic layer. If the printed layer transmits light, when rendering a latent image based on a birefringence pattern visible with a filter, the print and latent image become visible in combination.

Figs. 6(a) to (d) are examples of transfer-type patterned birefringent products each having a dynamic property control layer 17 and a transfer layer 18. A dynamic property control layer is a layer that controls the separation property so that an optically anisotropic layer is transferred to the targeted material when prescribed conditions are satisfied when the transfer layer is brought into contact with the targeted material. A separation layer imparting a separating property to an adjacent layer and a cushion layer that increases transferability by applying uniform stress during transfer are examples of dynamic property control layers. In addition to common adhesives and contact adhesives, examples of the transfer layer include hot melt contact adhesives that develop adhesiveness when heated, UV contact adhesives that develop adhesiveness when exposed to UV radiation, and layers on which the pattern to be transferred is printed in the form of a contact adhesive. Although not shown in the figure, such a layer can also function as both an orientation layer and a dynamic property control layer. A transfer-type patterned birefringent product having no reflective layer can be transferred to a targeted material having a reflective property to obtain a reflecting type product.

Figs. 7(a) to (d) show examples having surface layers 19. Examples of surface layers include hardcoat layers for surface protection, water-repellent layers to keep fingerprints from sticking and to prevent doodling with magic markers, electrically conductive layers imparting touch panel properties, blocking layers that make the product invisible to an IR camera by not transmitting IR radiation, circularly polarized light-selective reflective layers in which an image is made to disappear by a circularly polarized light filter by not passing left or right circularly polarized light, photosensitive layers imparting photosensitivity to an optically anisotropic layer, antenna layers functioning as RFID antennas, immersion-detecting layers that detect immersion in water by changing color or the like when immersed in water, thermotropic layers that change color based on temperature, coloration-filtering layers that control the colors of latent images, polarized layers in which latent images become visible when a switch is made between polarized light/unpolarized light on the light source side of transmitting-type product, magnetic layers that impart magnetic recording properties, as well as matting layers, scattering layers, lubricating layers, photosensitive layers, antistatic layers, and resist layers. The surface layer may also correspond to an additive layer for subsequently adding a plasticizer or a photopolymerization initiator to a patterned optically anisotropic layer (or a layer for forming the patterned optically anisotropic layer).

The patterned birefringent products shown in Figs. 8(a) to (c) have multiple patterned optically anisotropic layers. The in-plane slow axes of the multiple optically anisotropic layers can be identical or different. The regions of multiple optically anisotropic layers of different birefringence can align or be different. For example, the patterned birefringent product may include a layer of a periodic retardation pattern and a layer of a non-periodic retardation pattern (Fig.9, for example), or may include a layer of a periodic retardation pattern and a layer of another periodic retardation pattern (Fig.10, for example). In the structure shown in Fig.10, the images observed from the viewing angle 1 and viewing angle 2 are different. That is, with a combination of layers of different periodic retardation patterns, an image showing different colors or periodicities depending on the viewing angle is possible.

Although not shown, there can be three or more patterned optically anisotropic layers. By providing two or more optically anisotropic layers of mutually different retardation or slow axes and imparting independent patterns to each, latent images with various functions can be formed.

[The patterned optically anisotropic layer]

The types and the production methods for the patterned optically anisotropic layer are not particularly limited as far as the patterned optically anisotropic layer is an optically anisotropic layer having two or more regions of different

birefringence. Examples include layers prepared through predetermined steps from the optically anisotropic layer disclosed in Japanese Unexamined Patent Publication (KOKAI) No. 2009-69793 as set forth above. The optically anisotropic layer is preferably a layer formed from a composition containing a liquid-crystal compound. Since temperature change and humidity change can be reduced, the liquid-crystal compound is preferably a discotic liquid-crystal compound or a rod-like liquid-crystal compound having reactive groups. It is of still greater preference for the above composition to contain a liquid-crystal compound having two or more reactive groups per liquid-crystal molecule. In the case of a mixture of two or more liquid-crystal compounds, at least one of the liquid-crystal compounds preferably have two or more reactive groups.

A liquid-crystal compound having two or more reactive groups with different crosslinking mechanisms is preferably employed. An optically anisotropic layer containing a polymer having an unreacted reactive group can then be prepared by causing just a portion of the two or more reactive groups to polymerize through the selection of conditions. The crosslinking mechanism is not specifically limited, and can consist of a condensation reaction, hydrogen bonding, polymerization, or the like. Of the two or more mechanisms, at least one is preferably polymerization, and the use of two or more different forms of polymerization is preferable. Generally, not only the vinyl groups, (meth)acrylic groups, epoxy groups, oxetanyl groups, and vinyl ether groups that are employed in polymerization, but also hydroxyl groups, carboxylic acid groups, amino groups, and the like can be employed in the crosslinking reaction. Specific examples of preferable rod-like liquid-crystal compounds include the compounds disclosed in Japanese Unexamined Patent Publication (KOKAI) No. 2009-69793.

The patterned birefringent product can be prepared by preparing a patterned optically anisotropic layer through predetermined steps from an optically anisotropic layer and if necessary forming additional layers. The steps conducted for preparing the patterned optically anisotropic layer are not particularly limited and examples include patterned light exposure, heating, and thermal writing. A patterned optically anisotropic layer can be efficiently prepared preferably by conducting a patterned light exposure and heating in this order on a birefringence pattern builder including an optically anisotropic layer.

[Patterned light exposure]

In the present description, the term "patterned light exposure" means exposure conducted in a manner that some of the regions of a birefringence pattern builder are exposed to light or exposure conducted under different exposure conditions in two or more regions. In exposures conducted under different exposure conditions to each other, no exposure (unexposed regions) may be included. The patterned light exposure technique employed can be contact exposure with a mask, proximity exposure, projection exposure, or the like. Scanning exposure in which a laser, electron beam, or the like is focused on a determined position, without employing a mask, to directly draw an image can also be employed. When the form of the birefringence pattern builder is sheet-like, batch-type light exposure can be employed and when the form of the birefringence pattern builder is roll-like, Roll to Roll light exposure can be employed. The illumination wavelength of the light source used in exposure preferably has a peak at 250 to 450 nm, and more preferably, has a peak at 300 to 410 nm. Specific examples include ultra-high-pressure mercury lamps, high-pressure mercury lamps, metal halide lamps, and blue lasers. The preferred exposure level is normally about 3 to 2,000 mJ/cm$^2$, more preferably about 5 to 1,000 mJ/cm$^2$, and optimally, about 10 to 500 mJ/cm$^2$. The resolution in patterned light exposure is preferably 1,200 dpi or higher to permit the formation of a microprint latent image. To increase the resolution, it is preferable and necessary for the patterned optically anisotropic layer to be solid during patterned light exposure, and for the thickness to be 10 micrometers or less. To achieve a thickness of 10 micrometers or less, the patterned optically anisotropic layer is preferably formed of a layer containing a polymerizable liquid-crystal compound the orientation of which has been fixed. More preferably, the polymerizable liquid-crystal compound contains two or more types of reactive groups with different crosslinking mechanisms. The center core employed in the Roll to Roll light exposure is not particularly limited, the outer diameter of the center core is preferably about 10 to 3000mm, more preferably about 20 to 2000mm and further preferably about 30 to 1000mm. Tension at the rolling to the center core is not particularly limited and is preferably about 1 N to 2000N, more preferably about 3N to 1500N and further preferably about 5N to 1000N.

[Exposure conditions during patterned light exposure]

In the course of conducting the exposure of two or more regions of the birefringence pattern builder under mutually different exposure conditions, the "two or more regions" may or may not have overlapping portions. However, the regions preferably do not have overlapping portions. Patterned light exposure can be conducted in multiple exposure cycles; can be conducted for example in a single exposure cycle using a mask or the like having two or more regions exhibiting different transmission spectra based on the region; or the two can be combined. That is, during patterned light exposure, exposure can be conducted such that two or more regions that have been exposed under different exposure conditions are produced. The scanning exposure is preferable because, in the scanning exposure, the exposure conditions can be varied for each region by the techniques of varying the light source intensity by exposure region, changing the illumination spots of the exposure regions, changing the scan rate, and the like.

The exposure conditions are not specifically limited. Examples include the peak exposure wavelength, the exposure illuminance, the exposure time, the exposure level, the temperature during exposure, and the atmosphere during exposure. Of these, from the perspective of the ease of adjusting exposure conditions, the peak exposure wavelength, the exposure illuminance, the exposure time, and the exposure level are preferred, and the exposure illuminance, exposure time, and exposure level are more preferred. The regions that are exposed under mutually different exposure conditions during patterned light exposure are subsequently subjected to a baking step and exhibit mutually different birefringence that is controlled based on the exposure conditions. In particular, different retardation values are imparted to the regions. That is, by adjusting the exposure conditions for each region during patterned light exposure, a birefringence pattern of desired retardation that differs by region can be obtained after the baking step. The exposure conditions can be varied continuously or discontinuously between two or more exposure regions being exposed under different exposure conditions.

[Mask exposure]

Exposure employing an exposure mask is useful as a means of producing exposure regions under different exposure conditions. For example, exposure can be conducted with an exposure mask so that only one region is exposed. Then exposure with a separate mask or total surface exposure can be conducted with the temperature, atmosphere, exposure illuminance, exposure time, and exposure wavelength changed. In this manner, exposure conditions of the region exposed first and the regions subsequently exposed can be readily changed. Masks having two or more regions exhibiting different transmission spectra to each other are particularly useful as masks for changing the exposure illuminance or exposure wavelength. In that case, different exposure illuminances and exposure wavelengths in multiple regions can be achieved in a single exposure cycle. Different exposure levels can also be imparted with an identical period of exposure under different exposure illuminances.

[Scanning exposure]

Scanning exposure can be conducted by applying an image drawing device to form a desired two-dimensional pattern on a drawing surface with light, for example.

One representative example of such a drawing device is an image recording device that is configured to use a laser beam deflection scanning means to scan an object that is being scanned with a laser beam directed from a laser beam generating means to record a prescribed image or the like. This type of image recording device modulates the laser beam being directed from the laser beam generating means based on an image signal during the recording of the image or the like (Japanese Unexamined Patent Publication (KOKAI) Heisei No. 7-52453).

A device in which recording is conducted by scanning a laser beam in a secondary scan direction on an object being scanned that has been adhered on the outer circumference surface of a drum rotating in a primary scan direction, and a device in which recording is conducted by rotationally scanning a laser beam over an object being scanned that has been adhered to the cylindrical inner circumference surface of a drum can be employed (Japanese Patent No. 2,783,481).

A drawing device forming a two-dimensional pattern on a drawing surface with a drawing head can also be employed. For example, an exposure device forming a desired two-dimensional pattern on the exposure surface of a photosensitive material or the like with an exposure head, which is employed to fabricate semiconductor substrates and print plates, can be employed. A typical example of such an exposure head is equipped with a pixel array with multiple pixels that generates a group of light points constituting a desired two-dimensional pattern. By operating this exposure head while displacing it relative to an exposure surface, a desired two-dimensional pattern can be formed on the exposure surface.

As an exposure device such as those set forth above, for example, an optical device has been proposed that forms a desired image on an exposure surface by displacing a digital micromirror device (DMD) in a prescribed scan direction on an exposure surface, inputting frame data comprised of multiple drawing point data corresponding to the multiple micromirrors into the memory cells of the DMD based on the displacement in the scan direction, and sequentially forming a group of drawing points corresponding to the micromirrors of the DMD in a time series (Japanese Unexamined Patent Publication (KOKAI) No. 2006-327084).

In addition to the above DMD, a transmitting-type spatial light-modulating element can be employed as the spatial light-modulating element provided on an exposure head. The spatial light-modulating element can be of either the reflecting type or transmitting type. Additional examples of spatial light-modulating elements include the micro-electrical mechanical system (MEMS) type of spatial light-modulating element (Spacial light modulator (SLM)), optical elements that modulate transmitted light by means of an electro-optical effect (PLZT elements), liquid-crystal light shutters

(FLC), and other liquid-crystal shutter arrays. The term "MEMS" is a general term for microsystems integrating microscopic sensors, actuators, and control circuits by means of micromachining technology based on IC manufacturing processes. The term "MEMS-type spatial light-modulating element" means a spatial light-modulating element that is driven by electromechanical operation utilizing electrostatic forces.

A device in which multiple grating light valves (GLVs) are disposed in a two-dimensional configuration can also be employed.

In addition to the above laser beam source, lamps and the like can be employed as the light sources of the exposure head.

[Patterned light exposure of two or more optically anisotropic layers]

A new transfer material for building birefringence patterns can also be transferred onto a laminate obtained by patterned light exposure on a birefringence pattern builder, and then patterned light exposure can be conducted again. In that case, the retardation values remaining following baking in a region that remains unexposed both the first and second times (which normally have the lowest retardation values), a region that is exposed the first time but is not exposed the second time, and a region that is exposed both the first and second times (which normally have the highest retardation values) can be effectively changed. Regions that are not exposed the first time but are exposed the second time can be thought of as being identical after the second exposure to regions that have been exposed both the first and second times. Similarly, by alternately conducting transfer and patterned light exposure three or four times, four or more regions can be readily prepared. This method is useful when it is desirable to impart differences (differences in optical axis direction, extremely large differences in retardation, and the like) to different regions that cannot be imparted by means of exposure conditions alone.

[Heating (baking)]

A birefringence pattern can be prepared by heating a birefringence pattern builder that has been subjected to the patterned light exposure at 50°C or higher but not higher than 400°C, preferably at 80°C or higher but not higher than 400°C. As a heating unit, hot-air furnace, muffle furnace, IR heater, ceramic heater, electric furnace, or the like can be employed. When the form of the birefringence pattern builder is sheet-like, batch-type heating can be employed and when the form of the birefringence pattern builder is roll-like, roll-to-roll-type heating can be employed. The center core employed in the roll-to-roll-type heating is not particularly limited, the outer diameter of the center core is preferably about 10 to 3000mm, more preferably about 20 to 2000mm and further preferably about 30 to 1000mm. Tension at the rolling to the center core is not particularly limited and is preferably about 1 N to 2000N, more preferably about 3N to 1500N and further preferably about 5N to 1000N.

The birefringence pattern can contain a region in which the retardation is essentially 0. For example, when an optically anisotropic layer is formed employing a liquid-crystal compound having two or more reactive groups, portions that remain unexposed following patterned light exposure lose their retardation during baking, resulting in a retardation of essentially 0.

Also, a new transfer material for building a birefringence pattern can be transferred onto a birefringence pattern builder that has been baked, after which patterned light exposure and baking can be conducted anew. In that case, combining the first and second exposure conditions, the retardation value remaining after the second baking can be effectively changed. This method is useful when it is desirable to form two regions with birefringence properties that mutually differ in the directions of the slow axes in shapes that do not overlap.

[Thermal writing]

As set forth above, a retardation of essentially 0 can be achieved by baking unexposed regions. Thus, in addition to a latent image based on patterned light exposure, a latent image based on thermal writing can be included in a patterned birefringent product. Thermal writing can be conducted with a thermal head, or by drawing with an IR or YAG laser or the like. For example, information that must be kept secret (personal information, passwords, management codes of products that could compromise designs, and the like) can be conveniently rendered as latent images in combination with a small printer having a thermal head. Thermal writing IR and YAG lasers that are usually used for corrugated fiberboard containers can be used without any modification.

[Functional layers of the product of the present invention]

Examples of the functional layers constituting the product of the present invention include a support, an orientation layer, a printed layer, an adhesive layer, and as needed, a releasing layer, a printed layer in addition to the patterned

optically anisotropic layer. An adhesive layer, in a product prepared by using a birefringent transfer foil, may also be exemplified. These functional layers can be incorporated into the birefringence pattern builder in advance, or can be formed after fabricating the patterned optically anisotropic layer.

The functional layers can be formed by the dip coating, air knife coating, spin coating, slit coating, curtain coating, roller coating, wire bar coating, gravure coating, and extrusion coating methods (US Patent 2,681,294). In that case, two or more layers can be simultaneously applied. Simultaneous coating methods are described in US Patent Nos. 2,761,791, 2,941,898, 3,508,947, 3,526,528, and by Harasaki, Y., Coating Engineering, p. 253, Asakura Shoten (1973). Methods of formation other than the above can be employed based on the properties of the functional layers.

[Support]

The support constituting the product of the present invention is not particularly limited and may be rigid or flexible, and a flexible support is preferred. As a rigid support, examples include, although not particularly limited to, known glasses such as soda glass sheet having a silicon oxide film formed on the surface thereof, low-expansion glass, non-alkali glass, and quartz glass sheets, metal plates such as aluminum plate, iron plate, and SUS plate, resin plates, ceramic plates, and stone slabs. Examples of flexible supports include plastic films such as cellulose esters (such as cellulose acetate, cellulose propionate, and cellulose butyrate), polyolefins (such as norbornene polymers), poly(meth)acrylic acid esters (such as polymethyl methacrylate), polycarbonates, polyesters, polysulfones, and norbornene polymers, paper, aluminum foil, and cloth. Due to ease of handling, the thickness of the rigid support is preferably 100 to 3000 micrometers, and more preferably, 300 to 1500 micrometers. The thickness of the flexible support is preferably 3 to 500 micrometers, and more preferably 10 to 200 micrometers.

As described above, the support can be the base material.

[Orientation layer]

The product of the present invention may have an orientation layer, for example, when a layer is used which is prepared from an optically anisotropic layer by applying and drying the solution containing a liquid-crystal compound to form a liquid crystal phase and by subjecting liquid crystal phase to heating and light irradiation to achieve polymerization and fixation. An orientation layer is provided generally on the support or temporary support, or on an undercoating layer applied on the support or temporary support. The orientation layer functions to determine the orientation of the liquid-crystal compound provided on the orientation layer. The orientation layer can be any layer as far as it can impart an orientation to the optically anisotropic layer. Preferred examples of the orientation layer include rubbed layers of organic compounds (preferably polymers); optical orientation layers that exhibit a liquid-crystal orienting property by irradiation with polarized light, such as azobenzene polymers and polyvinyl cinnamate; oblique vapor-deposition layers of inorganic compounds; microgrooved layers; cumulative films of *omega*-tricosanoic acid, dioctadecyl methyl ammonium chloride, methyl stearate or the like formed by the Langmuir-Blodgett method (LB method); and films in which a dielectric is oriented by imparting an electric or magnetic field. In the rubbed form of orientation films, polyvinyl alcohol is preferably contained, and the ability to crosslink with at least one layer either above or below the orientation layer is particularly preferred. An optical orientation layer and microgrooves are preferred as methods of controlling the direction of orientation. Compounds that exhibit orientation based on dimers, such as polyvinyl cinnamate, are particularly preferred as optical orientation layers. Embossing with a master roll manufactured in advance by mechanical or laser processing is particularly preferable for microgrooves.

[Adhesive layer]

The product of the present invention may include an adhesive layer, for example when the product is prepared by using a birefringent transfer foil. As the adhesive layer, a pressure-sensitive resin layer, a photosensitive resin layer and heat-sensitive resin layer can be used.

[The reflective layer]

The birefringent transfer foil can have a reflective layer to achieve visual effects as needed. The reflective layer is not specifically limited. However, one without a depolarizing property is desirable. Examples include thin metal layers, layers containing metal products, and thin dielectric layers.

The metal that is employed in the thin metal layer is not specifically limited. Examples include aluminum, chromium, nickel, silver, and gold. Thin metal films can be monolayer films or multilayer films. For example, they can be manufactured by vacuum film formation, physical vapor deposition, chemical vapor deposition, or the like. Examples of layers containing reflective metal products are layers printed with inks of gold and silver, for example.

The thin dielectric layer can be a monolayer film or a multilayer film. A thin film prepared using a material with a large difference in refractive index with the adjacent layer is desirable. Examples of materials with high refractive indexes include titanium oxide, zirconium oxide, zinc sulfide, and indium oxide. Examples of materials with low refractive indexes include silicon dioxide, magnesium fluoride, calcium fluoride, and aluminum fluoride.
The support or the base material itself can have reflective property.

[The printed layer]

The product of the present invention can include a printed layer to achieve visual effects as needed. Examples of printed layers include layers in which visible patterns, or patterns that are visible with UV or infrared radiation, have been formed. Since UV fluorescent ink and IR inks are themselves security printings, they are desirable to enhance security. The method of forming the printed layer is not specifically limited. Commonly known relief printing, flexo printing, gravure printing, offset printing, screen printing, inkjet printing, xerography, and the like can be employed. Various inks can be employed. From the perspective of durability, UV ink is preferably employed. Microprinting at a resolution of 1,200 dpi or higher is desirable to enhance security.
An Image derived from the printed layer can be observed in combination with the invisible birefringent pattern (latent image) to form an image including a periodic structure when observed through a polarizing plate. An Image derived from the printed layer can also be the one designed independently from the latent image.

[Indentification of the latent image of the product of the present invention]

Combinations of non-latent image and the latent image, or the latent image of the product of the present invention of the present invention can be identified through a polarizing plate. Latent image with the specific effect which can be identified using an additional sheet can be identified by observation through a polarizing plate and an additional sheet.
Examples of the additional sheets include a parallel lines sheet or a lens assembly sheet as set forth above. In an embodiment in which a lens assembly sheet is used, a latent image having a stereoscopic effect can be identified by rotating the polarizing plate or the lens assembly sheet to adjust the position. The exact adjustment of the lens assembly sheet and polarizing plate is not required.
A polarizing plate and an additional sheet corresponding to the products of the present invention made in the configuration by which an effect can be identified with the additional sheet can be provided as a sheet for observation of the products of the present invention by superimposing the polarizing plate and the additional sheet in a direction suitable for observation of the product.

EXAMPLES

The present invention will be described in greater detail below through Examples. The materials, reagents, substance quantities and ratios, operations, and the like that are indicated in the Examples below can be suitably modified without departing from the purpose or spirit of the present invention. Accordingly, the scope of the present invention is not limited to the specific examples given below.

(Preparation of orientation layer coating liquid AL-1)

The following composition was prepared, filtered through a polypropylene filter with a pore diameter of 30 micrometers, and employed as orientation layer coating liquid AL-1.

| Orientation layer coating liquid composition (mass %) | |
|---|---|
| Polyvinyl alcohol (PVA205, manufactured by Kuraray Co.,LTD. | 3.21 |
| Polyvinylpyrrolidone (Luvitec K30, manufactured by BASF) | 1.48 |
| Distilled water | 52.10 |
| Methanol | 43.21 |

(Preparation of optically anisotropic layer coating liquid LC-1)

The following composition was prepared, filtered through a polypropylene filter with a pore diameter of 0.2 micrometers, and employed as optically anisotropic coating liquid LC-1.

LC-1-1 was a liquid-crystal compound having two reactive groups. One of the two reactive groups was a radically reactive group in the form of an acrylic group, and the other was a cationically reactive group in the form of an oxetane group.

| Optically anisotropic layer coating liquid composition (mass%) | |
|---|---|
| Polyermizable liquid-crystal compound (LC-1-1) | 32.88 |
| Horizontal orientation agent (LC-1-2) | 0.05 |
| Cationic photopolymerization initiator (CPI100-P, manufactured by San-Apro) | 0.66 |
| Polymerization controlling agent (Irganox 1076, manufactured by Chiba Specialty Chemicals) | 0.07 |
| Methyl ethyl ketone | 46.34 |
| Cyclohexanone | 20.00 |

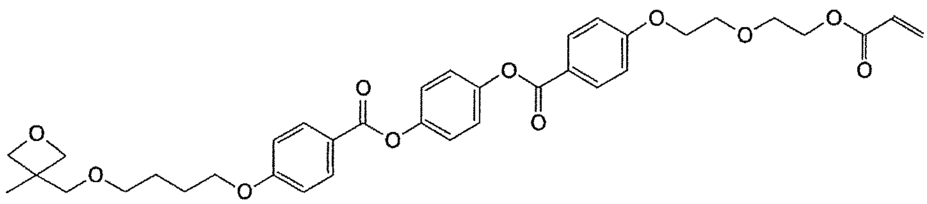

(LC-1-1)

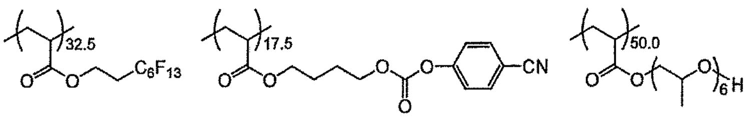

(LC-1-2)

(Preparation of additive layer coating liquid OC-1)

The composition indicated below was prepared, passed through a polypropylene filter with a pore size of 0.2 micrometers, and employed as additive layer coating liquid OC-1. A radical photopolymerization initiator RPI-1 was employed in the form of 2-trichloromethyl-5-(p-styrylstyryl)-1,3,4-oxydiazole. The following composition is the amount used as a solution.

| Additive layer coating liquid composition (mass %) | |
|---|---|
| Binder (MH-101-5, manufactured by Fujikura Kasei Co., Ltd.)) | 7.63 |
| Radical photopolymerization initiator (RPI-1) | 0.49 |
| Surfactant (Megafac F-176PF, manufactured by Dainippon Ink Chemical Industries) | 0.03 |
| Methyl ethyl ketone | 91.85 |

(Preparation of birefringence pattern builder P-1)

Aluminum was deposited 60nm on a surface of a polyimide film of 50 micrometers in thickness (Kapton 200H, Du Pont-Toray Co., Ltd.) to prepare a reflective layer with support. On the surface to which the aluminum was deposited, orientation layer coating liquid AL-1 was applied by using a wire bar, and the coating was dried to obtain a dry film of 0.5 micrometers in thickness. After a rubbing treatment of the orientation layer, a wire bar was used to apply optically anisotropic layer coating liquid LC-1, the film surface was dried for 2 minutes at a temperature of 90°C to impart a liquid crystal phase, and a 160 W/cm air-cooled metal halide lamp (manufactured by EYE GRAPHICS) was employed in air to radiate UV radiation, fix the orientation state of the liquid crystal phase, and form an optically anisotropic layer of 4.5 micrometers in thickness. In this process, the luminance of the UV radiation employed was 500 $mW/cm^2$ over the UV-A region (cumulative wavelengths 320 to 400 nm) and the irradiation energy was 500 $mJ/cm^2$ over the UV-A region. The retardation of the optically anisotropic layer was 400 nm. The polymer was a solid at 20°C. Finally, additive layer coating liquid OC-1 was applied on the optically anisotropic layer, the coating was dried, and an additive layer of 0.8 micrometers in thickness was formed to complete birefringence pattern builder P-1.

(Example 1: Patterned birefringent product having periodic structure)

Birefringence pattern builder P-1 was subjected to a pattern exposure in Roll to Roll as shown in Fig. 11, with a digital exposure apparatus (INPREX IP-3600H, manufactured by Fuji Film) by laser scanning exposure. The exposure was conducted such that, in Fig. 11, the exposure level in the region denoted by no shading was 0 $mJ/cm^2$, the exposure level in the region denoted by diagonal lines was 8 $mJ/cm^2$, the exposure level in the region denoted by vertical lines was 25 $mJ/cm^2$, and the exposure level in the region denoted by cross shapes was 150 $mJ/cm^2$. In Fig. 11, the region denoted by cross shapes was designed to achieve a periodic structure (stipple of 240 micrometers pitch). Subsequently, a continuous furnace connected to a far infrared radiation heater was employed to heat the surface of the film Roll to Roll for 20 minutes to a temperature of 210°C, thereby obtaining patterned birefringent product P-2. When a polarizing plate (HLC-5618 manufactured by Sanritz Corporation) was superimposed on the product P-2, the birefringence pattern provided on the product P-2 was recognized visually at the prescribed direction of the polarizing plate. In Fig. 11, in contrast to the aluminum foil corresponding to non-shaded region indicating silver, two color stripe shaped pattern including the regions marked with diagonal lines, indicating dark blue to blue and the parts marked with vertical lines indicating yellow to orange was observed.

Further, when a lens assembly sheet (Micro lens array sheet manufactured by Gras Pack JAPAN Co., Ltd.: pitch = 256 micrometers) was further superimposed on the polarizing plate, the periodic structure design became a background with a sense of depth (purple cross shapes appeared to sink down into the back side), and the stripe-shaped design loomed out of the background. Fig.12 was a sectional view schematically showing the relation between the configuration of the birefringent pattern prepared above and the lens assembly sheet. In Fig. 12, the exposure regions shown by diagonal lines and vertical lines were the strip shaped design and the width is 3 mm. The relation between the pitch of the periodic structure design and the structure unit was shown in Fig. 13.

(Example 2: Patterned birefringent product having periodic structure)

Birefringence pattern builder P-1 was subjected to a pattern exposure in Roll to Roll as shown in Fig. 14, with a digital exposure apparatus (INPREX IP-3600H, manufactured by Fuji Film) by laser scanning exposure. The exposure was conducted such that, in the domain shown as design 1 in Fig. 14, the exposure level in the region denoted by no shading was 0 $mJ/cm^2$, the exposure level in the region denoted by black was 8 $mJ/cm^2$ (each width of the lines is 1 mm). In the domain shown as design 2 in Fig. 14, the exposure level in the region denoted by no shading was 0 $mJ/cm^2$, the exposure level in the region denoted by reticulation was 25 $mJ/cm^2$ (each width of the lines is 1 mm). An image editing software "Stereo photo maker" was used in order to prepare a design in which design 1 and design 2 were each fabricated into stripe shaped image having 200 micrometers gaps after every 200 micrometers and combined (an image of 400 micrometers pitch). Solid images of design 1 and design 2 were separately prepared and input into the software to fabricate them into a stripe shaped image.

Subsequently, a continuous furnace connected to a far infrared radiation heater was employed to heat the surface of the film Roll to Roll for 20 minutes to a temperature of 210°C, thereby obtaining patterned birefringent product P-3. When a polarizing plate (HLC-5618 manufactured by Sanritz Corporation) was superimposed on the product P-3, the birefringence pattern provided on the product P-3 was recognized visually at the prescribed direction of the polarizing plate. In Fig.14, a mixed image of two patterns is observed indicating the domain of design 1 with diagonal stripe pattern of dark blue to blue and silver (aluminum foil of background), and the domain of design 2 with horizontal stripe pattern of yellow to orange and silver (aluminum foil of background).

Further, when a parallel lines sheet was superimposed, only design 1 or design 2 loomed depending on the adjusted position. When the parallel lines sheet was superimposed in the position as schematically shown in Fig. 15, only design 1 was observed. The parallel lines sheet was prepared by printing tripe shaped pattern of 200 micrometers width (400 micrometers pitch) on an OHP sheet. For the printing, a commercially available printer (Fuji Xerox Docuprint C3530) was used.

Key to the Numbers

**[0097]**

| | |
|---|---|
| 101 | Patterned optically anisotropic layer |
| 11 | Temporary support or support |
| 13 | Reflective layer or semi-transmissive semi-reflective layer |
| 14 | Orientation layer |
| 15 | Adhesive layer |
| 16 | Printed layer |

17 Dynamic property control layer
18 Transfer layer
19 Additive layer or surface layer
21 Polarizing plate
22 Lenz assembly sheet
23 Parallel lines sheet

**Claims**

1. A product comprising a patterned optically anisotropic layer having two or more regions of different birefringence, which has a latent image becoming visible through a polarizing plate, wherein an image visible through the polarizing plate including the latent image comprises a periodic structure.

2. The product according to claim 1, wherein periodic pitch of the periodic structure is 1 to 10 micrometers.

3. The product according to claim 1 or 2, wherein the latent image comprises a periodic structure.

4. The product according to any one of claims 1 to 3, wherein the regions of different birefringence are regions of different retardation.

5. The product according to any one of claims 1 to 4, wherein the patterned optically anisotropic layer is formed by a method comprising the following steps (1) to (3) in this order:

   (1) heating or irradiating with light a layer formed of a composition comprising a liquid-crystal compound;
   (2) subjecting the layer to patterned light exposure; and
   (3) heating the obtained layer to 50°C or higher but not higher than 400°C.

6. The product according to any one of claims 1 to 5, wherein the image visible through the polarizing plate comprises a periodic structure and a non-periodic structure.

7. The product according to any one of claims 1 to 6, wherein the image visible through a polarizing plate consists of a periodic structure.

8. The product according to any one of claims 1 to 7, which further comprises a printed layer.

9. A combination of a lens assembly sheet, a polarizing plate, and the product according to any one of claims 1 to 8, wherein the periodic structure is designed to correspond to period of lens of the lens assembly sheet.

10. The combination according to claim 9, wherein periodic pitch of the periodic structure is 0.1 to 0.999 times or 1.001 to 2.0 times of periodic pitch of lens of the lens assembly sheet.

11. A combination of a parallel lines sheet, a polarizing plate, and the product according to any one of claims 1 to 8, wherein the periodic structure is designed to correspond to period of the parallel lines sheet.

12. A sheet for observing the latent image of the product according to any one of claims 1 to 8, which comprises a lens assembly layer and a polarizing layer, wherein period of the lens assembly layer is selected to correspond to the periodic structure of the product.

13. A combination of the product according to any one of claims 1 to 8 and a sheet comprising a lens assembly layer and a polarizing layer, wherein the periodic structure of the product is designed to correspond to period of lens of the lens assembly layer.

14. A sheet for observing the latent image of the product according to any one of claims 1 to 8, which comprises a layer having parallel lines and a polarizing layer, wherein period of the parallel lines is selected to correspond to the periodic structure of the product.

15. A combination of the product according to any one of claims 1 to 8 and a sheet comprising a layer having parallel

lines and a polarizing layer, wherein the periodic structure of the product is designed to correspond to period of the parallel lines.

Fig.1

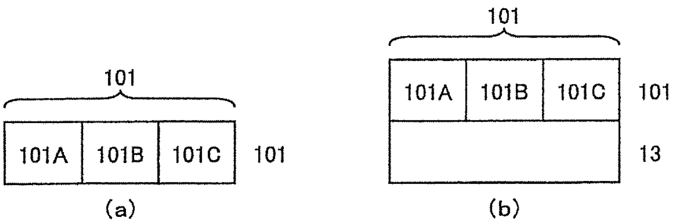


Fig.2

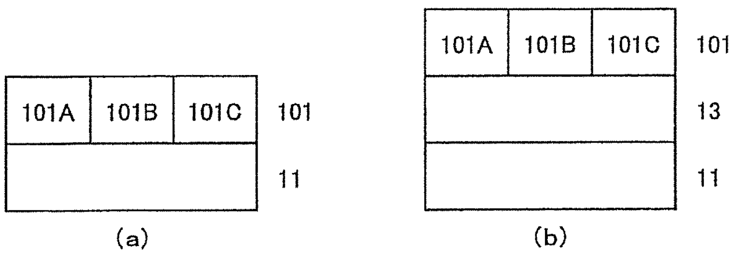


Fig.3

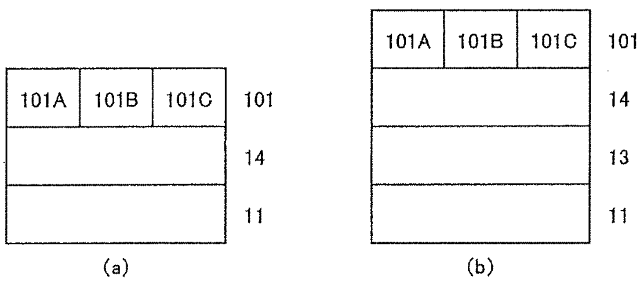


Fig.4

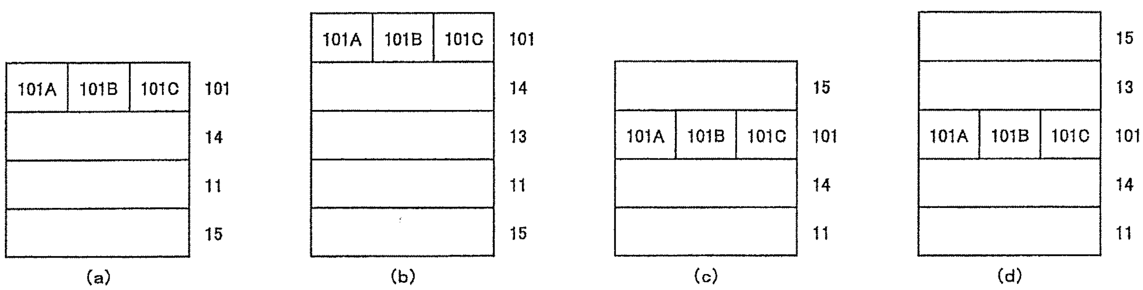

Fig.5

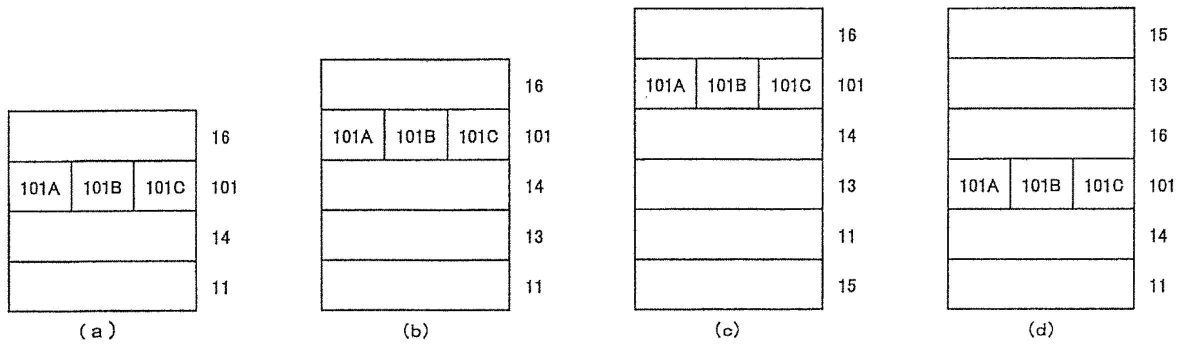


Fig.6

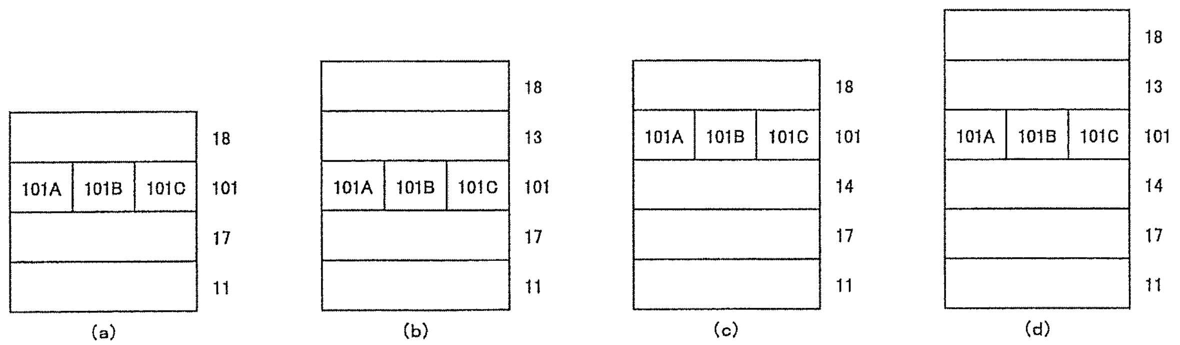


Fig.7

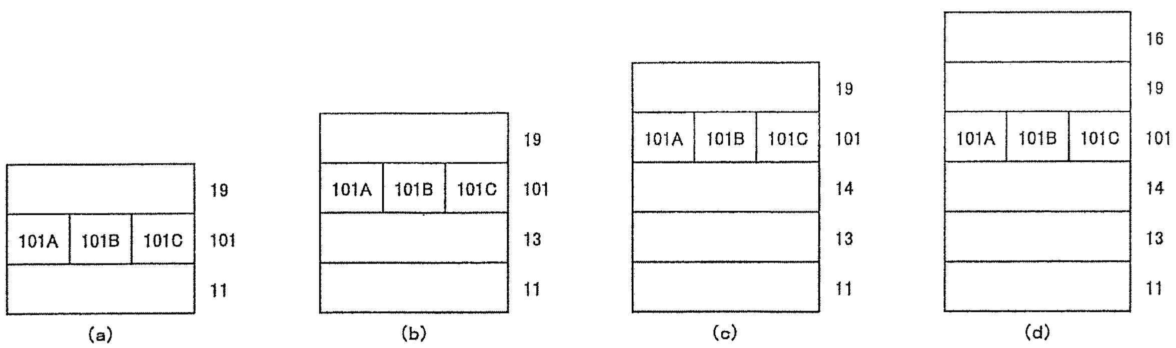

Fig.8

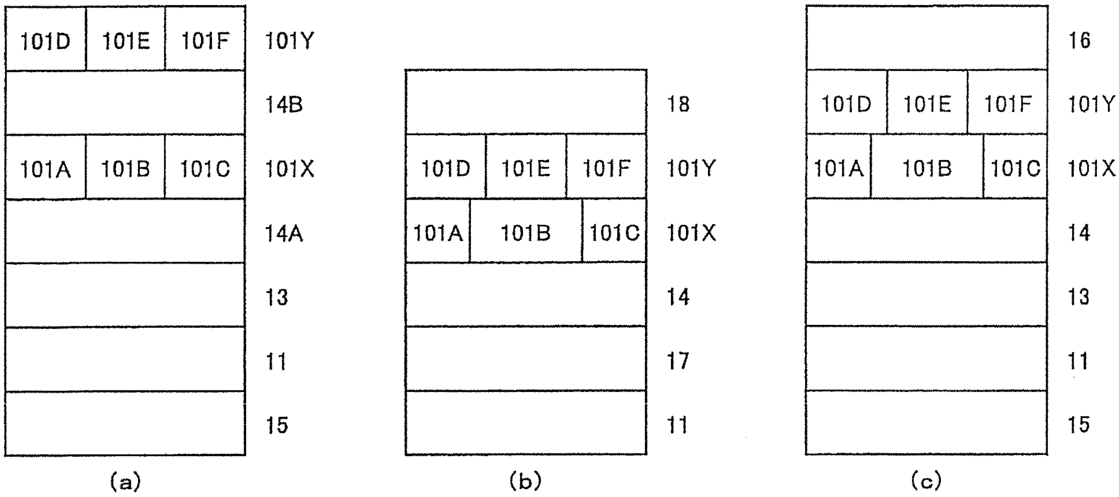


Fig.9

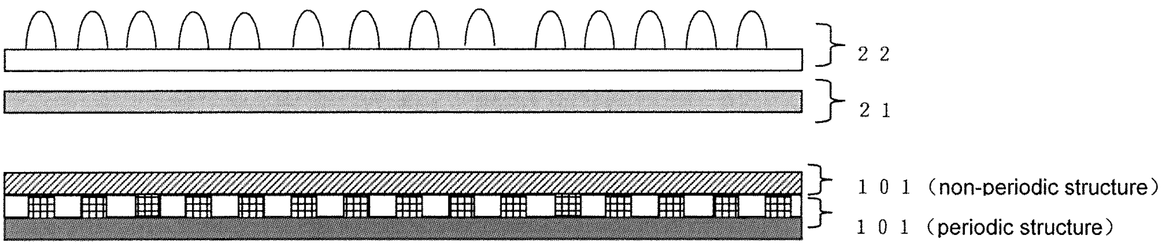


Fig.10

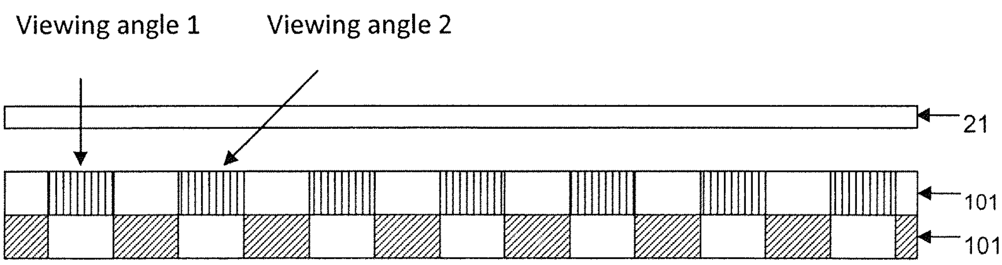

Fig.11

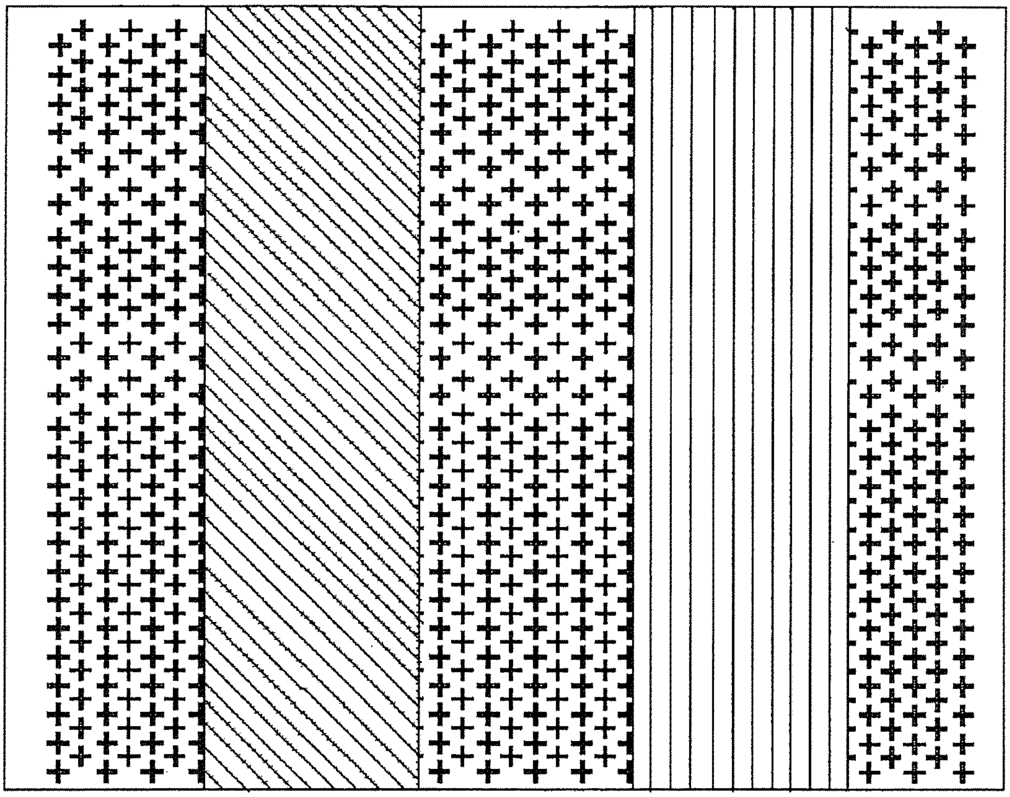

Fig.12

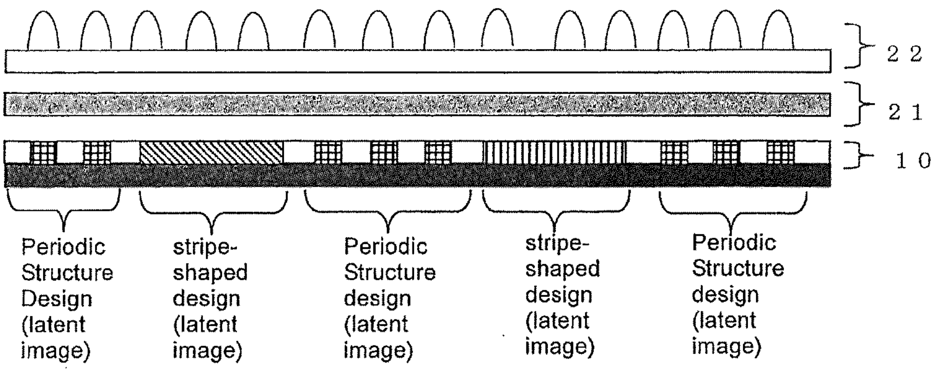
22
21
101
Periodic Structure Design (latent image)
stripe-shaped design (latent image)
Periodic Structure design (latent image)
stripe-shaped design (latent image)
Periodic Structure design (latent image)

Fig.13

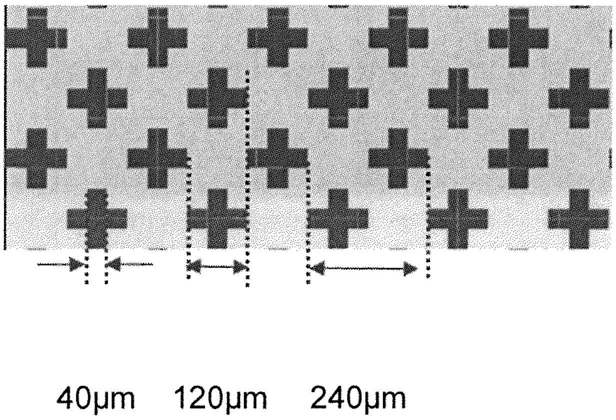
40μm
120μm
240μm

Fig.14

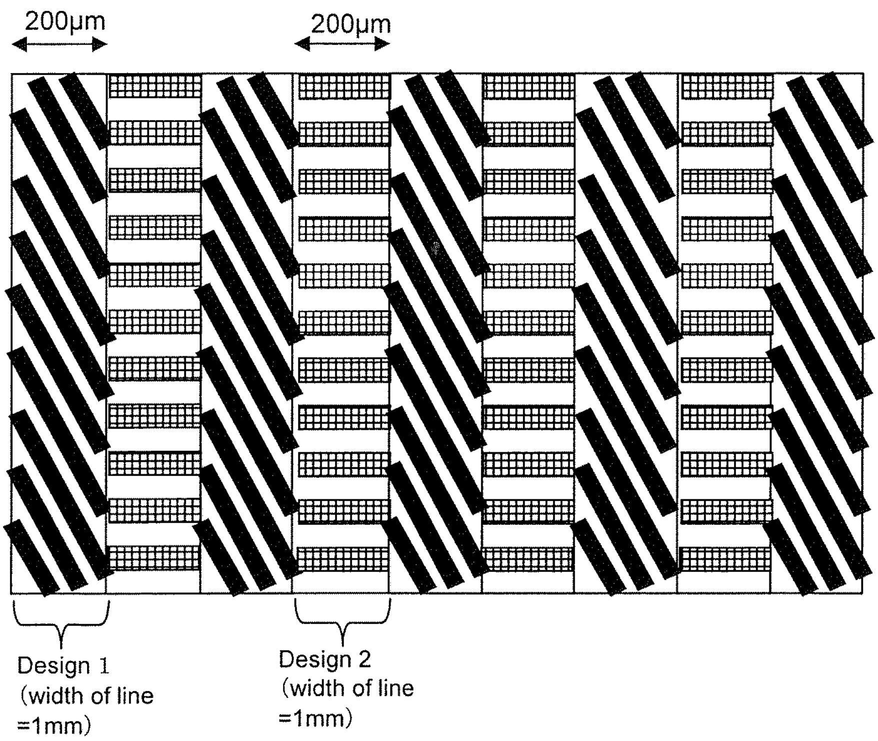
200μm
200μm
Design 1
(width of line
=1mm)
Design 2
(width of line
=1mm)

Fig.15

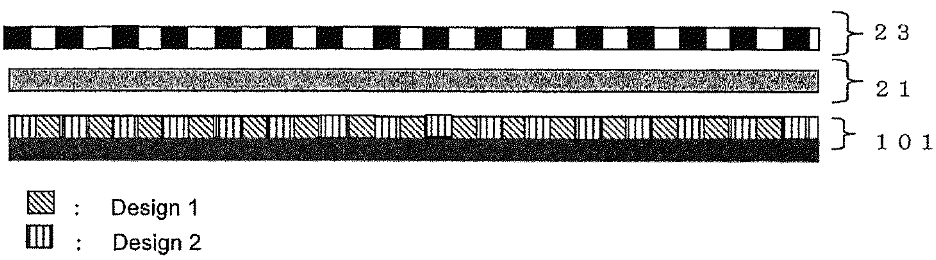

**INTERNATIONAL SEARCH REPORT**

International application No.
PCT/JP2012/074086

A. CLASSIFICATION OF SUBJECT MATTER
*G02B5/30*(2006.01)i, *B32B7/02*(2006.01)i, *G02B3/00*(2006.01)i

According to International Patent Classification (IPC) or to both national classification and IPC

B. FIELDS SEARCHED

Minimum documentation searched (classification system followed by classification symbols)
G02B5/30, B32B7/02, G02B3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2010-221542 A (Toppan Printing Co., Ltd.),<br>07 October 2010 (07.10.2010),<br>paragraphs [0024] to [0038], [0056] to [0064],<br>[0066] to [0076]<br>(Family: none) | 1-4,6,7,11,<br>14,15<br>5,8-10,12,13 |
| Y | JP 2011-95389 A (Fujifilm Corp.),<br>12 May 2011 (12.05.2011),<br>paragraphs [0025], [0080]<br>(Family: none) | 5,8 |
| Y | JP 2011-25557 A (Dainippon Printing Co., Ltd.),<br>10 February 2011 (10.02.2011),<br>paragraphs [0004] to [0007], [0024]<br>(Family: none) | 9,10,12,13 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 October, 2012 (18.10.12) | 30 October, 2012 (30.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009069793 A
- JP 2010113249 A
- JP HEISEI9146045 B
- JP 4685101 B
- JP 2005096267 A
- JP 2008256590 A
- JP 7052453 A
- JP 2783481 B
- JP 2006327084 A
- US 2681294 A
- US 2761791 A
- US 2941898 A
- US 3508947 A
- US 3526528 A


### Non-patent literature cited in the description


- *Journal of the Optical Society of America,* 1949, vol. 39, 791-794
- **OISHI NORIJI.** A study of periodic stereo image which uses a feature of moire interference. *Image Information and Television, Technical report,* June 2010, vol. 34 (24), 15-28
- **HARASAKI, Y.** Coating Engineering. Asakura Shoten, 1973, 253